Europäisches Patentamt

European Patent Office

Office européen des brevets

(19)

(11) EP 0 606 536 B1

(12) **EUROPÄISCHE PATENTSCHRIFT**

(45) Veröffentlichungstag und Bekanntmachung des Hinweises auf die Patenterteilung:
**08.04.1998 Patentblatt 1998/15**

(51) Int Cl.$^6$: **G01F 1/66**

(21) Anmeldenummer: **93116028.7**

(22) Anmeldetag: **05.10.1993**

(54) **Messwertgeber mit Ultraschallwandler**

Sensor with ultrasonic transducer

Capteur avec transducteur ultrasonique

(84) Benannte Vertragsstaaten:
**CH DE DK LI NL SE**

(30) Priorität: **11.01.1993 CH 60/93**

(43) Veröffentlichungstag der Anmeldung:
**20.07.1994 Patentblatt 1994/29**

(73) Patentinhaber: **Landis & Gyr Technology Innovation AG**
**6301 Zug (CH)**

(72) Erfinder:
• **Adam, Norbert**
**D-63452 Hanau 1 (DE)**

• **Hauenstein, Günther**
**D-63477 Maintal 3 (DE)**

(74) Vertreter: **Müller, Hans-Jürgen, Dipl.-Ing. et al**
**Patentanwälte Dipl.-Ing. Hans-Jürgen Müller,**
**Dipl.-Chem.Dr. Gerhard Schupfner,**
**Dipl.-Ing. Hans-Peter Gauger,**
**Postfach 101161**
**80085 München (DE)**

(56) Entgegenhaltungen:
EP-A- 0 048 791    EP-A- 0 081 663
DE-A- 2 934 031    DE-B- 2 924 561
US-A- 2 931 223    US-A- 4 140 012

**Beschreibung**

Die Erfindung bezieht sich auf einen Messwertgeber mit Ultraschallwandlern gemäss dem Oberbegriff des Anspruchs 1.

Solche Messwertgeber mit Ultraschallwandlern eignen sich zur Messung der Strömungsgeschwindigkeit eines Mediums mittels akustischer Wellen beispielsweise bei elektronischen Wärmezählern oder Durchflussvolumenzählern.

Es ist ein Ultraschallwandler dieser Art aus der DE-PS 29 34 031 bekannt, der Konstruktionsmerkmale des Ultraschallwandlers für den Gebrauch in heissen, flüssigen Medien zeigt. Der aktive Teil des Ultraschallwandlers besteht aus einer relativ dünnen Scheibe aus einer Piezokeramik zwischen flächigen Elektroden, die auf den Stirnseiten der Scheibe angeordnet sind. Die erste Elektrode überzieht die vordere Stirnseite völlig und greift zum besseren Kontaktieren über den Zylindermantel der Scheibe auf die hintere Stirnseite über. Die im Zentrum angeordnete zweite Elektrode auf der hinteren Stirnseite weist einen Durchmesser kleiner als der Radius der Scheibe auf. Der Durchmesser der zweiten Elektrode ist dabei höchstens halb so groß wie der Durchmesser der dünnen Scheibe aus Piezokeramik. Dabei ist es vorteilhaft, den Durchmesser der Piezoscheibe größer als die lichte Weite des Meßrohrs zu gestalten, um die Abstrahlung einer ebenen Ultraschallwelle mit konstanter Intensitätsverteilung in dem Meßrohr zu gewährleisten. Die elektrischen Anschlüsse sind auf der vom fliessenden Medium abgewandten hinteren Stirnseite angeordnet, wobei die Zuführdrähte von Hand angelötet sind.

Als Piezokeramik eignen sich Materialien, die unter dem Namen SONOX von Hoechst CERAMTEC hergestellt und angeboten werden.

Es ist auch ein Messwertgeber mit zwei gleichen Ultraschall-Wandlern bekannt (CH-PS 654 105), bei dem die Ultraschall-Wandler gleichzeitig einen kurzen Wellenzug mit Ultraschall von beiden Seiten durch das im Messrohr des Messwertgebers strömende Medium senden, wobei der eine Wellenzug stromaufwärts und der andere stromabwärts zum anderen Ultraschall-Wandler eilt. Aus der Laufzeitdifferenz der eintreffenden Wellenzüge ist die mittlere Strömungsgeschwindigkeit des Mediums berechenbar.

Der Ultraschall wird von der vorderen Stirnseite der Scheibe aus Piezokeramik abgestrahlt. Wie aus der DE-29 24 561 bekannt ist, ist aus hydraulischen und messtechnischen Gründen zwischen der Stirnseite und dem Eingang des Messrohrs ein Abstand einzuhalten, der dem Innenradius des Messrohrs entspricht.

Aus der EP-451'355 A1 ist bekannt, dass ein Teil des Ultraschalls neben dem Messrohr vorbei an eine Gehäusewand geworfen und wieder gegen den Sender reflektiert wird. Da die Schallgeschwindigkeit im Medium stark von dessen Temperatur abhängig ist, können die reflektierten Schallwellen von der Temperatur des Mediums abhängige Messfehler bewirken.

Der Erfindung liegt die Aufgabe zugrunde, einen Messwertgeber der im Oberbegriff des Patentanspruchs 1 angegebenen Art zu schaffen, dessen Messrohr gut durchschallt ist und dennoch einen stark verminderten Temperaturgang des Messfehlers aufweist.

Die Lösung der Aufgabe gelingt mit den im Anspruch 1 angegebenen Merkmalen. Vorteilhafte Ausgestaltungen ergeben sich aus den abhängigen Ansprüchen.

Nachfolgend werden Ausführungsbeispiele der Erfindung anhand der Figuren näher erläutert.

Es zeigt:

Figur 1       einen Messwertgeber für Ultraschall und

Figur 2       einen Ultraschallwandler.

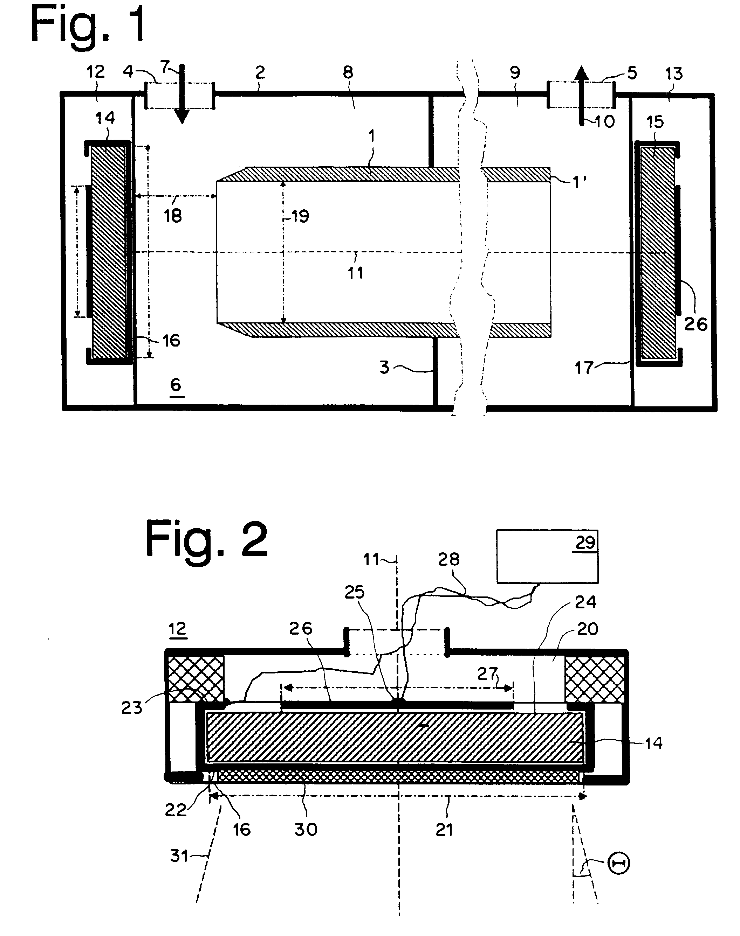

In der Figur 1 bedeuten 1 ein Messrohr, 2 ein Gebergehäuse mit einer Trennwand 3, 4 einen Einlass und 5 einen Auslass mit einem angeschlossenen Rohrsystem für ein Medium 6. Die Trennwand 3 teilt das Gebergehäuse 2 in zwei Kammern, die durch das Messrohr 1 strömungstechnisch miteinander verbunden sind. Das Rohrsystem führt das Medium 6, ein Gas oder eine Flüssigkeit, durch den Einlass 4 in das Gebergehäuses 2. Das Medium 6 strömt in Richtung eines Pfeiles 7 durch den Einlass 4 in eine erste Kammer 8 des Gebergehäuses 2, durch das Messrohr 1 in die zweite Kammer 9 des Gebergehäuses 2 und verlässt die zweite Kammer 9 in Richtung eines Pfeiles 10 durch den Auslass 5 und kehrt in das angeschlossene Rohrsystem zurück.

Ausserhalb des Gebergehäuses 2 und beidseits des Messrohres 1 sind auf dessen verlängerten Achse 11 die Ultraschallwandler 12, 13 so angeordnet, dass sie beim Abstrahlen von Ultraschall-Wellenzügen diese durch das Messrohr 1 hindurch gegeneinander aussenden. Jeder Ultraschallwandler 12 bzw. 13 weist als aktiver Teil ein Plättchen 14 bzw. 15 aus einer Piezokeramik auf, das zentrisch zur Achse 11 ausgerichtet ist.

Für Ultraschall durchlässige Membrane 16 und 17 schützen die Plättchen 14, 15 vor den schädigenden Einflüssen des Mediums 6 und schliessen das Gebergehäuse 2 dicht ab, so dass es einen Teil des Rohrsystems für das Medium 6 bildet.

Damit im Medium 6 aus hydraulischen Gründen ein vorgegebener Druckabfall nicht überschritten wird, wenn das Medium 6 durch das Gebergehäuse 2 und das Messrohr 1 fliesst, ist einerseits ein minimaler Abstand 18 zwischen der Membran 16 bzw. 17 und dem nächstliegenden Eingang des Messrohrs 1 einzuhalten und andererseits darf der Abstand 18 nicht so gross sein, dass der Ultraschall auf eine Stirnfläche 1' des Messrohrs 1 auftrifft.

Es ist für die Optimierung der hydraulischen und akustischen Bedingungen von Vorteil, wenn das Verhältnis des Abstands 18 zum Innendurchmesser 19 zwischen 0,5 und 0,9 beträgt.

Das Messrohr 1 weist eine im wesentlichen konstante Wandstärke auf, die sich beispielsweise an beiden Enden des Messrohrs 1 verjüngt, um die den Ultraschallwandlern 12, 13 zugewandte Stirnfläche 1' des Messrohres 1 zu reduzieren. In der Zeichnung der Figur 1 ist dies beispielhaft an einem Ende des Messrohrs 1 dargestellt.

Zwischen den beiden Membranen 16, 17 erstreckt sich die mit Ultraschall durchschallbare Messstrecke längs der Achse 11, wobei im Innern des Messrohres 1 die Querschnittfläche Q im wesentlichen konstant ist. Die Querschnittfläche Q ist durch die Innenwand des Messrohrs 1 begrenzt, so dass deren Berandung von der Form des Messrohres 1 abhängig ein Kreis, ein Oval, ein Quadrat, ein Rechteck usw. sein kann.

Beide auf der gemeinsamen Achse 11 gegenüberliegende Ultraschallwandler 12, 13 senden einander gleichzeitig einen Ultraschall-Wellenzug von vorbestimmter Länge zu. Beim Ultraschallwandler 12 bzw. 13 trifft der Wellenzug des gegenüberliegenden Ultraschallwandlers 13 bzw. 12 nach einer gewissen Laufzeit ein und erzeugt dort in an sich bekannter Weise elektrische Messignale. Wegen des Dopplereffekts sind die Laufzeiten der Wellenzüge von der Strömung des Mediums 6 abhängig, so dass aus den Messignalen die Strömungsgeschwindigkeit des Mediums 6 und zusammen mit der Querschnittsfläche Q auch der Durchfluss ermittelt werden können.

Beispielhaft ist der Messwertgeber rotationssymmetrisch, d. h. die Querschnittfläche Q ist durch einen Kreis berandet und deren Flächeninhalt durch den Innendurchmesser 19 des Messrohrs 1 bestimmt. Der Ultraschallwandler 12 in der Figur 2 weist in seinem Gehäuse eine Nische 20 auf, in der das scheibenförmige Plättchen 14 mit dem Scheibendurchmesser 21 aus Piezokeramik angeordnet ist. Die eine dem Medium 6 (Figur 1) zugewandte Stirnseite ist vollflächig mit einer Elektrode 22 überzogen, die sich über den Zylindermantel des Plättchens 14 bis zu einem Randstreifen 23 auf der ersten gegenüberliegenden zweiten Stirnseite 24 des Plättchens 14 fortsetzt. Der Durchstosspunkt der Achse 11 bestimmt das Zentrum 25 der zweiten Stirnseite 24 und einer kreisrunden zweiten Elektrode 26 mit dem Elektroden-Durchmesser 27, die auf der zweiten Stirnseite 24 angebracht ist. Am Randstreifen 23 und im Zentrum 25 ist ein Paar Anschlussdrähte 28 als Verbindung zwischen dem Plättchen 14 und einem elektronischen Gerät 29 angelötet, über die das Gerät 29 zum Senden von Ultraschall dem Plättchen 14 elektrische Schwingungen einer vorbestimmten Frequenz (z. B. 1 MHz) übermittelt bzw. während des Empfangs vom Plättchen 14 die Messignale erhält.

Der zweite Ultraschallwandler 13 (Figur 1) ist genau gleich aufgebaut, insbesondere sind die aktiven Teile, das Plättchen 15 (Figur 1) und die zweite Elektrode 26 genau rotationssymmetrisch zur Achse 11 angeordnet.

Der Vorteil eines völlig rotationssymmetrischen Aufbaus liegt in der einfachen Ausrichtung der Ultraschallwandler 12, 13, der Plättchen 14, 15 und der Elektroden 22, 26 auf das Messrohr 1.

Die Plättchen 14, 15 sind akustisch mit den Membranen 16, 17 (Figur 1) gekoppelt, beispielsweise mittels einer beidseits klebenden dünnen Kunststoffolie 30, die das Plättchen 14, 15 mit einer dünnen, etwa 0,1 mm dicken Stahlfolie verklebt. Solche beidseitig klebende Kunststoffolien 30 werden als Transferfolien von der Firma 3M, Minnesota Mining and Manufacturing Corp. USA, hergestellt.

Die erste Elektrode 22 auf der ersten Stirnseite der Plättchen 14, 15 muss nicht notwendigerweise die ganze erste Stirnseite bedecken, jedoch sind die Plättchen 14, 15 wenigstens auf der Fläche der zweiten Elektrode 26 beidseitig mit den beiden Elektroden 22, 26 belegt.

Aus Gründen der ungestörten Schwingungssymmetrie ist es von Vorteil, wenn der Flächeninhalt der zweiten Elektrode 26 weniger als die Hälfte des Flächeninhalts der ersten Elektrode 22 beträgt.

Erstreckt sich die erste Elektrode 22 über die Berandung des Plättchens 14 bzw. 15 hinaus zu der Randzone 23 auf der zweiten Stirnseite 24, ergibt sich eine vorteilhafte Kontaktierung der Elektroden 22, 26 auf der gleichen Stirnseite 24.

Weicht die Querschnittsfläche Q von einer Kreisfläche ab, so weist mit Vorteil wenigstens die zweite Elektrode 26 eine Fläche mit einer ähnlichen Berandungsform wie die Querschnittsfläche Q auf.

Ein elektrisches Wechselfeld zwischen den beiden Elektroden 22 und 26 regt das Plättchen 14 bzw. 15 zu mechanischen Schwingungen an. Die Plättchen 14, 15 weisen mit Vorteil Abmessungen auf, bei denen die Dikke eine halbe Wellenlänge der mechanischen Schwingungen im Plättchenmaterial beträgt und die Flächenabmessungen, beispielsweise der Scheibendurchmesser 21, kein ganzzahliges Vielfaches dieser Wellenlänge ist. Damit wird ein Abstrahlen der Schwingungen senkrecht zur Achse 11, der Radialschwingungen, stark unterdrückt und der Schall in Richtung zur Achse 11 in das Medium 6 (Figur 1) mit maximaler Intensität abgestrahlt; dies erweist sich für den Betrieb des Messwertgebers von Vorteil. Die Wellenlänge des Ultraschalls im Medium 6 hängt jedoch von der Schallgeschwindigkeit im Medium 6 ab. Beispielsweise beträgt die Wellenlänge in Wasser 1,5 mm für eine Frequenz von etwa 1 MHz.

Die Abmessungen der zweiten Elektrode 26 bestimmt die Grundfläche eines Schallfeldes, das sich vor dem Plättchen 14 bzw. 15 im Medium 6 ausbildet, während das Verhältnis V der Wellenlänge des Ultraschalls im Medium 6 zu den Abmessungen der zweiten Elektrode 26 einen Einfluss auf die Divergenz, das ist der halbe Oeffnungswinkel, dieses Schallfeldes hat.

Vor dem Ultraschall abstrahlenden Plättchen 14 bzw. 15 bildet sich auf einer Länge L eine Nah- oder Fresnelzone aus, in der sich ein in das Medium 6 abgestrahltes Ultraschallbündel 31 fast parallel zur Achse 11 ausbreitet. Am Beispiel der Kreisform für die Querschnittsfläche Q, für die zweite Elektrode 26 und für die Plättchen 14, 15 bildet sich in der Nahzone ein Zylinder mit der Länge

$$L = \frac{(\text{Elektroden-Durchmesser 27})^2}{\text{Wellenlänge im Medium 6}}$$

und einer Grundfläche mit dem Elektroden-Durchmesser 27 aus.

Das axiale Ultraschallbündel 31 weist eine Divergenz mit dem Winkel $\Theta = \arcsin(0{,}6{\cdot}V)$ auf.

Der Vollständigkeit halber sei erwähnt, dass ausserhalb des oben beschriebenen Ultraschallbündels 31 mit der maximalen Intensität des Ultraschalls noch weitere Bündel mit geringeren Intensitäten unter vorgegebenen Winkeln zur Achse 11 von den Plättchen 14, 15 abgestrahlt werden.

Eine genügend gute Ausschallung der Querschnittsfläche Q des Messrohres 1 (Figur 1) und eine Unterdrückung des von der Temperatur abhängigen Messfehlers wird erreicht, wenn wenigstens die Hälfte des Querschnitts Q am Rohreingang beschallt wird, wobei die Stirnfläche 1' (Figur 1) des Messrohres 1 nicht im intensiven Ultraschallbündel liegen dürfen und die Fläche der zweiten Elektrode 26 dem Querschnitt Q ähnlich ist. Der Vorteil eines Messwertgebers mit den Ultraschallwandlern 12, 13 liegt im praktischen Fehlen von temperaturabhängigen Messfehlern.

Für das Beispiel der Kreisform weist das Verhältnis des Elektroden-Durchmessers 27 zum Innendurchmesser 19 einen Wert zwischen 0,5 und 1 auf.

Um einen Einfluss der Randzone der Plättchen 14, 15 zu vermeiden, die das Schallfeld stören könnte, beträgt der Wert des Quotienten aus dem Scheibendurchmessers 21 der Plättchen 14, 15 und dem Innendurchmesser 19 mit Vorteil mehr als 1,1.

Weist die Querschnittfläche eine andere Berandung als ein Kreis auf, so treten anstelle der bestimmenden Abmessungen, wie Innendurchmesser 19, Scheibendurchmesser 21 und Elektroden-Durchmesser 27, die Abmessungen in den sich auf der Achse 11 schneidenden Symmetrieebenen der Messstrecke im Messrohr 1.

Bei einer nicht kreisförmigen Querschnittsfläche Q können die Plättchen 14, 15 auch scheibenförmig sein, wenn die grösste Abmessung der zweiten Elektrode 26 deutlich kleiner als der Scheibendurchmesser 21 ist. Der Vorteil dieser Auslegung sind die einfachere Herstellung aller Teile der Ultraschall-wandler 12, 13.

## Patentansprüche

1.  Meßwertgeber mit Ultraschallwandlern (12, 13),

    die längs einer gemeinsamen Achse (11) in entgegengesetzten Richtungen und durch ein von einem Medium (6) durchflossenen Meßrohr (1) laufende Ultraschall - Wellenzüge abstrahlen und empfangen,

    die in einem Abstand (18) vor dem näher liegenden Eingang des Meßrohres (1) angeordnet sind und

    die jeweils Plättchen (14, 15) aus Piezokeramik aufweisen, die auf einer dem Meßrohr (1) zugewandten Stirnfläche eine erste Elektrode (22) und auf der dem Meßrohr (1) abgewandten Stirnfläche (24) eine zweite Elektrode (26) aufweisen,

    **dadurch gekennzeichnet,**

    daß die Fläche der zweiten Elektrode (26) ähnlich der Querschnittsfläche (a) des Meßrohrs (1) und gleich oder kleiner als die Fläche des ersten Elektrode (22), sowie einerseits so groß ist, daß im Abstand (18) das Ultraschallbündel (31) unter Berücksichtigung seiner Divergenz am Eingang des Meßrohres (1) wenigstens die Hälfte der Querschnittsfläche (Q) des Meßrohrs (1) beschallt und andererseits so klein ist, daß die Stirnflächen (1') des Messrohres (1) nicht im intensiven Ultraschallbündel (31) liegen.

2.  Meßwertgeber nach Anspruch 1,
    dadurch gekennzeichnet,
    daß die Berandungsform der Querschnittsfläche (Q) des Meßrohres (1) und die Berandungsform der Fläche der zweiten Elektrode (26) zueinander ähnlich sind.

3.  Meßwertgeber nach einem der vorhergehenden Ansprüche,
    dadurch gekennzeichnet,
    daß die Berandungsform der Querschnittsfläche (Q) des Meßrohres (1) und die Berandungsform der Fläche der zweiten Elektrode (26) kreisförmig sind.

4.  Meßwertgeber nach einem der vorhergehenden Ansprüche,
    dadurch gekennzeichnet,
    daß das Verhältnis des Abstands (18) zum Innendurchmesser (19) des Meßrohrs (1) zwischen 0,5 und 0,9 beträgt.

5.  Meßwertgeber nach einem der vorhergehenden Ansprüche,
    dadurch gekennzeichnet,
    daß die Fläche der zweiten Elektrode (26) weniger als halb so groß ist wie die Fläche der zweiten Stirnseite (24).

6.  Meßwertgeber nach einem der vorhergehenden Ansprüche,
    dadurch gekennzeichnet,
    daß die Plättchen (14, 15) scheibenförmig sind und daß die Berandungsform der zweiten Elektrode (26) und/oder die Berandungsform der Querschnittsfläche (Q) des Messrohrs (1) eine vom Kreis abweichende ist.

7. Meßwertgeber nach Anspruch 6,
dadurch gekennzeichnet,
daß das Verhältnis des Scheibendurchmessers (21) der Plättchen (14; 15) zum Innendurchmesser (19) des Messrohrs (1) größer als 1,1 ist.

8. Meßwertgeber nach einem der vorhergehenden Ansprüche,
dadurch gekennzeichnet,
daß die Abmessungen der Plättchen (14, 15) senkrecht zur Achse (11) keine ganzzahligen Vielfachen der Dicke der Plättchen (14, 15) sind.

9. Meßwertgeber nach einem der vorhergehenden Ansprüche,
dadurch gekennzeichnet,
daß das Plättchen (14; 15) in einer Nische (20) eines Gehäuses des Ultraschallwandlers (12; 13) angeordnet ist, wobei das Plättchen mit der zweiten Stirnseite (24) gegen das Gehäuse abgestützt ist, und daß das Gehäuse zum Abdichten der Nische eine Membran (16, 17) aufweist, die die Nische dicht gegen das strömende Medium (6) abdeckt, und daß die erste Elektrode (22) auf der ersten Stirnseite mit der Membran (16, 17) mittels einer beidseitig klebenden dünnen Kunststofffolie (30) akustisch gekoppelt ist.

10. Meßwertgeber nach Anspruch 9,
dadurch gekennzeichnet,
daß die Membran (16, 17) eine dünne Stahlfolie ist.

**Claims**

1. A sensor having ultrasonic transducers (12, 13)

which emit and receive continuous ultrasonic wave trains along a common axis (11) in opposite directions and through a measuring tube (1) through which flows a medium (6),
which are arranged at a spacing (18) in front of the more closely disposed intake of the measuring tube (1) and
which each have respective plate portions (14, 15) of piezoceramic which have a first electrode (22) on a face towards the measuring tube (1) and a second electrode (26) on the face (24) remote from the measuring tube (1),

characterised in that
the surface area of the second electrode (26) is similar to the cross-sectional area (Q) of the measuring tube (1) and equal to or smaller than the surface area of the first electrode (22) and on the one hand is so large that at the spacing (18) the ultrasound beam (31) acoustically irradiates at least half of the cross-sectional area (Q) of the measuring tube (1) having regard to the divergence of the ultrasound beam at the intake of the measuring tube (1) and on the other hand is so small that the end faces (1') of the measuring tube (1) are not in the intensive ultrasound beam (31).

2. A sensor according to claim 1 characterised in that the boundary shape of the cross-sectional area (Q) of the measuring tube (1) and the boundary shape of the surface of the second electrode (26) are similar to each other.

3. A sensor according to one of the preceding claims characterised in that the boundary shape of the cross-sectional area (Q) of the measuring tube (1) and the boundary shape of the surface of the second electrode (26) are circular.

4. A sensor according to one of the preceding claims characterised in that the ratio of the spacing (18) to the inside diameter (19) of the measuring tube (1) is between 0.5 and 0.9.

5. A sensor according to one of the preceding claims characterised in that the surface area of the second electrode (26) is less than half as large as the surface area of the second face (24).

6. A sensor according to one of the preceding claims characterised in that the plate portions (14, 15) are disc-shaped and that the boundary shape of the second electrode (26) and/or the boundary shape of the cross-sectional area (Q) of the measuring tube (1) is a shape differing from a circle.

7. A sensor according to claim 6 characterised in that the ratio of the disc diameter (21) of the plate portions (14; 15) to the inside diameter (19) of the measuring tube (1) is greater than 1.1.

8. A sensor according to one of the preceding claims characterised in that the dimensions of the plate portions (14, 15) perpendicularly to the axis (11) are not integral multiples of the thickness of the plate portions (14, 15).

9. A sensor according to one of the preceding claims characterised in that the plate portion (14; 15) is arranged in a recess (20) in a housing of the ultrasonic transducer (12; 13), wherein the plate portion is supported with the second face (24) against the housing, and that for sealing the recess the housing has a diaphragm (16, 17) which covers over the recess sealingly with respect to the flowing medium (6), and that the first electrode (22) is acoustically coupled on the first face to the diaphragm (16, 17) by means of a thin plastics foil (30) which adheres on both sides.

10. A sensor according to claim 9 characterised in that the diaphragm (16, 17) is a thin steel foil.

**Revendications**

1. Capteur à transducteurs ultrasoniques (12, 13)

   qui émettent et reçoivent des trains d'ondes ultrasoniques qui se propagent le long d'un axe commun (11) dans des sens opposés et à travers un tube de mesure (1) parcouru par un milieu (6),
   qui sont agencés à une distance (18) devant l'entrée proximale du tube de mesure (1) et
   qui comportent respectivement des plaquettes (14, 15) en céramique piézoélectrique qui comportent une première électrode (22) sur la face frontale tournée vers le tube de mesure (1) et une deuxième électrode (26) sur la face frontale (24) opposée au tube de mesure (1),

   caractérisé en ce que,
   la surface de la deuxième électrode (26) est semblable à la surface en coupe transversale (Q) du tube de mesure (1) et égale ou inférieure à la surface de la première électrode (22), ainsi que d'une part suffisamment grande pour que le faisceau ultrasonique (31) soit incident à la distance (18), compte tenu de sa divergence à l'entrée du tube de mesure (1), sur au moins la moitié de la surface en coupe transversale (Q) du tube de mesure (1), et d'autre qu'elle soit suffisamment petite pour que les surfaces frontales (1') du tube de mesure (1) ne soient pas situées dans un faisceau ultrasonique intense.

2. Capteur selon la revendication 1
   caractérisé en ce que
   la forme périphérique de la surface en coupe transversale (Q) du tube de mesure (1) et la forme périphérique de la surface de la deuxième électrode (26) sont similaires entre elles.

3. Capteur selon l'une des revendications précédentes,
   caractérisé en ce que
   la forme périphérique de la surface en coupe transversale (Q) du tube de mesure (1) et la forme périphérique de la surface de la deuxième électrode (26) sont circulaires.

4. Capteur selon l'une des revendications précédentes,
   caractérisé en ce que
   le rapport entre la distance (18) et le diamètre intérieur (19) du tube de mesure (1) est compris entre 0,5 et 0,9.

5. Capteur selon l'une des revendications précédentes,
   caractérisé en ce que
   la surface de la deuxième électrode (26) est inférieure à la moitié de celle la surface de la deuxième face frontale (24).

6. Capteur selon l'une des revendications précédentes,
   caractérisé en ce que
   les plaquettes (14, 15) sont en forme de disques et en ce que la forme périphérique de la deuxième électrode (26) et/ou la forme périphérique de la surface en coupe transversale (Q) du tube de mesure (1) diffèrent d'une forme circulaire.

7. Capteur selon l'une des revendications précédentes,
   caractérisé en ce que
   le rapport entre le diamètre (21) de disque des plaquettes (14, 15) et le diamètre intérieur (19) du tube de mesure (1) est supérieur à 1,1.

8. Capteur selon l'une des revendications précédentes,
   caractérisé en ce que
   les dimensions des plaquettes (14,15) perpendiculairement à l'axe (11) ne sont pas des multiples entiers de l'épaisseur des plaquettes (14, 15).

9. Capteur selon l'une des revendications précédentes,
   caractérisé en ce que
   les plaquettes (14, 15) sont agencées dans une niche (20) d'un boîtier du transducteur ultrasonique (12,13), les plaquettes s'appuyant contre le boîtier par la deuxième face frontale (24), et en ce que le boîtier comporte, pour assurer l'étanchéité de la niche, une membrane (16, 17) qui protège de façon étanche la niche vis-à-vis du milieu qui s'écoule (6), et en ce que la première électrode (22) est couplée acoustiquement sur la première face frontale avec la membrane (16, 17) au moyen d'une mince feuille de matière plastique (30) adhésive sur ses deux faces.

10. Capteur selon la revendication 9,
    caractérisé en ce que
    la membrane (16, 17) est une mince feuille d'acier.

# Fig. 1

# Fig. 2